# FASCICULE DE BREVET EUROPEEN

(11) **EP 3 154 800 B1**
(45) Date de publication et mention de la délivrance du brevet: **17.07.2019**
(21) Numéro de dépôt: 15725759.3
(22) Date de dépôt: 17.04.2015
(51) Int. Cl.: B60G 13/00, B60G 15/06, B62D 25/08, B62D 29/00

(54) **MONTAGE D'UN AMORTISSEUR SUR UNE COUPELLE EN MATIÈRE COMPOSITE AVEC UNE PLAQUE D'APPUI**
MONTAGE EINES SCHWINGUNGSDÄMPFERS AN EINEM TELLER AUS KOMPOSITMATERIAL MIT EINER STÜTZPLATTE
MOUNTING OF A SHOCK ABSORBER ON A DISH OF COMPOSITE MATERIAL WITH A SUPPORT PLATE

(30) Priorité: 10.06.2014 FR 1455216
(43) Date de publication de la demande: 19.04.2017
(73) Titulaire: Renault S.A.S., 92100 Boulogne-Billancourt (FR)
(72) Inventeur: DUHEIM, Xavier, 92130 Issy Les Moulineaux (FR); BEZEAULT, Loic, 78000 Versailles (FR)
(86) Numéro de dépôt international: PCT/FR2015/051059
(87) Numéro de publication internationale: WO 2015/189490

(56) Documents cités:
- WO-A1-2014/183976
- DE-A1- 10 033 712
- DE-A1-102010 030 295

## Description

### Domaine technique de l'invention

L'invention concerne un dispositif pour monter un amortisseur sur une caisse d'un véhicule automobile, comprenant une coupelle d'amortisseur en matériau composite intégrée à la caisse.

L'invention a pour objet également un véhicule automobile comprenant une caisse, au moins un amortisseur et un tel dispositif assurant le montage de l'amortisseur sur la caisse.

### État de la technique

Le document DE 10 2010 030 295 A1 montre un dispositif selon le préambule de la revendication 1.

Les matériaux composites présentent beaucoup d'avantages. Ils permettent un allègement d'une structure tout en permettant d'en préserver la résistance. Ces avantages sont essentiels dans la conception d'un véhicule automobile, notamment au sujet de sa caisse. Toutefois, les pièces en matière composite, c'est-à-dire à base d'un mélange de fibres et d'une matrice, acceptent mal le fait d'être sollicitées par un effort statique permanent. Les réactions immédiates observées se traduisent par une dégradation autour de l'application de l'effort. Il s'agit par exemple de fissures de la matrice plus ou moins importantes en fonction de l'intensité de l'effort appliqué. Il peut encore apparaitre un phénomène de délaminage aux abords d'un trou de passage d'une vis formé dans la pièce, ce qui représente une zone de faiblesse. Dans le temps, des effets de fluage sont aussi susceptibles d'apparaitre, pouvant provoquer une perte de tension dans le couple de serrage initial lorsqu'une pièce est fixée à la pièce en composite via ce couple de serrage.

En particulier, il a été imaginé de concevoir et de fabriquer une coupelle d'amortisseur en matériau composite, qui est un élément structurel faisant partie intégrante de la caisse du véhicule et permettant la fixation d'une extrémité de l'amortisseur dont l'autre extrémité est fixée au train roulant. Toutefois, tous les problèmes listés ci-dessus liés à l'utilisation de la matière composite sont directement présents dans la mise en oeuvre d'une telle solution.

### Objet de l'invention

Le but de la présente invention est de proposer un dispositif pour monter un amortisseur sur une caisse d'un véhicule automobile et comprenant une coupelle d'amortisseur en matériau composite destinée a fixer un amortisseur à la caisse, qui remédie aux inconvénients listés ci-dessus.

Notamment, un objet de l'invention est de fournir un tel dispositif qui permette à la fois de fixer un amortisseur sur la caisse, l'implémentation d'une coupelle d'amortisseur en matière composite, le tout sans risquer de dégrader la coupelle, son matériau constitutif, en s'affranchissant de risque de diminution inopinée du couple de serrage nécessaire à la fixation de l'amortisseur ou de risque de vieillissement dans le temps.

Cet objet peut être atteint par l'intermédiaire d'un dispositif pour monter un amortisseur sur une caisse d'un véhicule automobile, comprenant une coupelle d'amortisseur en matériau composite intégrée à la caisse et une plaque d'appui destinée à être interposée entre l'amortisseur et la coupelle d'amortisseur, la plaque d'appui ayant des éléments de fixation permettant la fixation d'une extrémité de l'amortisseur sur la plaque d'appui, et configurée de sorte à reprendre les efforts de compression de l'amortisseur et à être en appui contre la coupelle d'amortisseur d'une manière répartissant ces efforts sur toute l'interface de contact entre la plaque d'appui et la coupelle d'amortisseur.

Selon l'invention, le dispositif comprend des éléments de fixation de la plaque d'appui sur la coupelle d'amortisseur.

La coupelle d'amortisseur est formée en deux pièces inférieure et supérieure distinctes, chacune formée dans un matériau composite, et la plaque d'appui peut venir en appui contre la pièce inférieure.

Les pièces inférieure et supérieure sont conformées et assemblées entre elles de sorte à délimiter intérieurement un corps creux et les éléments de fixation de la plaque d'appui sur la coupelle d'amortisseur comprennent des éléments d'entretoisement entre les pièces inférieure et supérieure à l'intérieur du corps creux, selon la direction d'orientation de l'appui de la plaque d'appui contre la coupelle d'amortisseur.

De préférence, les éléments d'entretoisement comprennent au moins un écrou soudé à la plaque d'appui, notamment une pluralité de tels écrous soudés répartis sur ladite interface, chaque écrou soudé étant orienté de manière à s'étendre en saillie de la plaque d'appui et à traverser l'épaisseur de la coupelle d'amortisseur, notamment la totalité de l'épaisseur du corps creux.

Les éléments d'entretoisement peuvent comprendre une vis associée à chaque écrou soudé et coopérant par vissage avec l'écrou soudé associé, la vis ayant une tête assurant une retenue axiale de la pièce supérieure de sorte que la tête de la vis et la plaque d'appui constituent des butées de retenue orientées dans des sens opposés respectivement pour les pièces supérieure et inférieure.

La vis et l'écrou soudé associé peuvent être configurés de sorte que la vis étant en butée de vissage dans l'écrou soudé, la tête ménage un premier entrefer par rapport à la pièce supérieure et les éléments de fixation de la plaque d'appui sur la coupelle d'amortisseur peuvent comprendre une première quantité de colle disposée entre la tête de la vis et la pièce supérieure dans le premier entrefer.

Selon un mode de réalisation particulier, les éléments de fixation de la plaque d'appui sur la coupelle d'amortisseur comprennent une deuxième quantité de colle disposée entre la plaque d'appui et la coupelle d'amortisseur, notamment au niveau de la pièce inférieure.

La pièce d'appui peut délimiter un épaulement pour délimiter un deuxième entrefer interposé entre la plaque d'appui et la coupelle d'amortisseur et permettant l'application de la deuxième quantité de colle.

Les éléments de fixation qui permettent la fixation d'une extrémité de l'amortisseur sur la plaque d'appui comprennent un mécanisme permettant l'application d'un couple de serrage sur l'amortisseur assurant la fixation de l'extrémité de l'amortisseur sur la plaque d'appui, la plaque d'appui étant enserrée entre ledit mécanisme et ladite extrémité d'amortisseur.

Un véhicule automobile pourra comprendre une caisse, au moins un amortisseur et un tel dispositif assurant le montage de l'amortisseur sur la caisse.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective de dessous d'un exemple de dispositif selon l'invention,
- les figures 2 et 3 sont des vues en perspective, respectivement de dessus et de côté en éclaté, du dispositif de la figure 1,
- la figure 4 est une vue en perspective du dispositif, sans la coupelle d'amortisseur,
- la figure 5 est une vue en perspective d'un écrou soudé utilisé sur les figures précédentes,
- et la figure 6 est une vue en coupe axiale du dispositif des figures précédentes.

### Description de modes préférentiels de l'invention

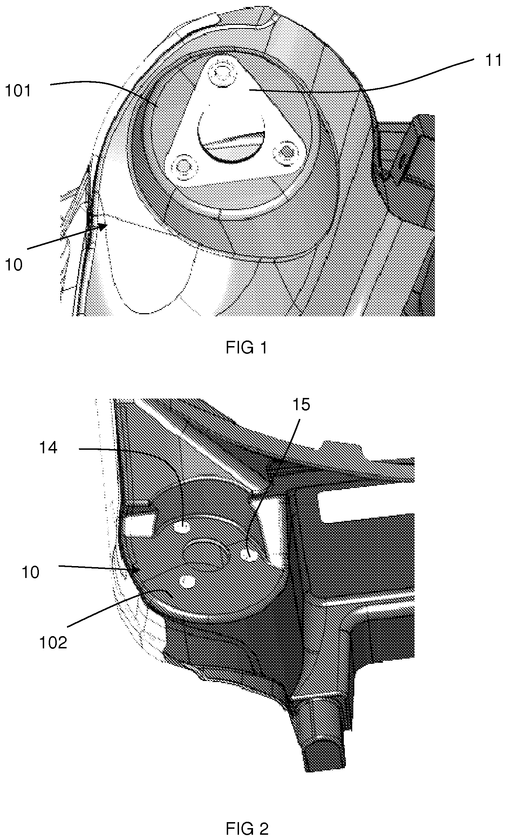

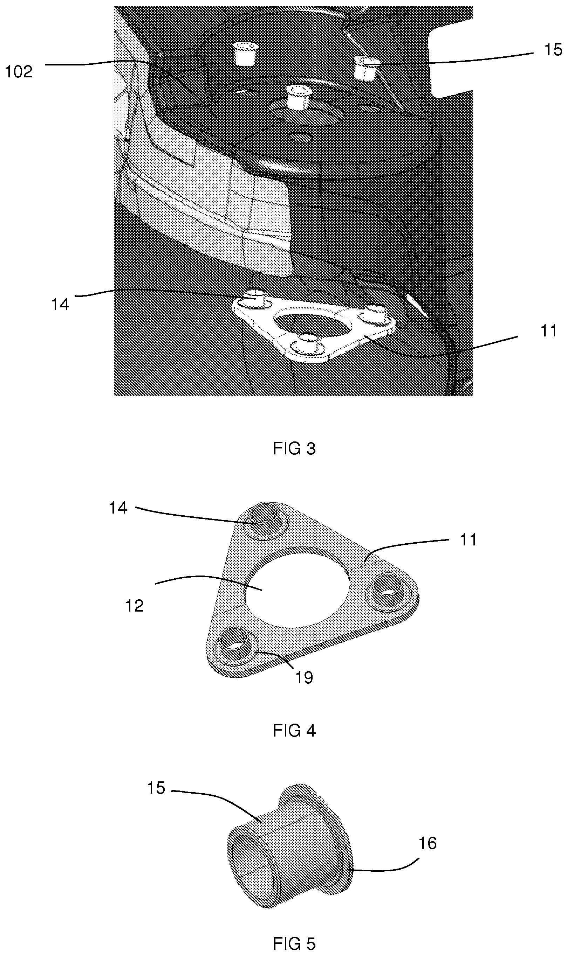

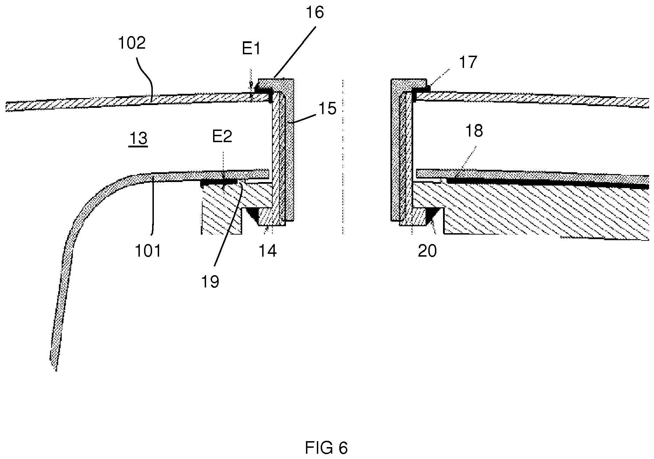

L'invention qui va être décrite ci-après, en référence aux figures 1 à 6 annexées, concerne globalement un dispositif pour monter un amortisseur (non représenté en tant que tel) sur une caisse d'un véhicule automobile (non représentée en tant que telle), comprenant une coupelle d'amortisseur 10 en matériau composite intégrée à la caisse.

Dans ce document, « matériau composite » ou « matière composite » corresponde de préférence à un matériau composé d'un mélange de renforts sous forme de fibres, notamment tissés, et d'une matrice, par exemple à base d'époxy.

Selon une caractéristique importante, le dispositif comprend une plaque d'appui 11 destinée à être interposée entre l'amortisseur et la coupelle d'amortisseur 10, ayant des éléments de fixation permettant la fixation d'une extrémité de l'amortisseur sur la plaque d'appui 11, et configurée de sorte à reprendre les efforts de compression de l'amortisseur et à être en appui contre la coupelle d'amortisseur 10 d'une manière répartissant ces efforts sur toute l'interface de contact entre la plaque d'appui 11 et la coupelle d'amortisseur 10.

L'invention a pour objet également un véhicule automobile comprenant une caisse, au moins un amortisseur et un tel dispositif assurant le montage de l'amortisseur sur la caisse.

Les éléments de fixation de l'extrémité de l'amortisseur sur la plaque d'appui comprennent par exemple une ouverture 12, par exemple de forme circulaire, délimitée dans la plaque d'appui 11 et destinée à être traversée par l'extrémité de l'amortisseur à fixer. Les éléments de fixation permettant la fixation de l'extrémité de l'amortisseur sur la plaque d'appui 11 comprennent aussi de préférence un mécanisme permettant l'application d'un couple de serrage sur l'amortisseur assurant la fixation de l'extrémité de l'amortisseur sur la plaque d'appui 11. La plaque d'appui 11 est alors enserrée, notamment dans la zone de l'ouverture 12, entre ce mécanisme et une partie de l'extrémité d'amortisseur.

Selon un mode de réalisation particulier mais non limitatif, le dispositif comprend des éléments de fixation de la plaque d'appui 11 sur la coupelle d'amortisseur 10. Il reste toutefois possible de prévoir que la plaque d'appui 11 ne soit qu'en contact contre la coupelle d'amortisseur 10 sans prévoir de fixation entre ces deux pièces qui resteraient alors indépendantes et séparables l'une de l'autre.

La nature et la forme de la coupelle d'amortisseur 10 en matière composite peuvent être quelconques dès lors qu'elles lui permettent de répondre à la fonction attendue d'une telle coupelle 10. Selon un mode de réalisation particulier mais non limitatif, la coupelle d'amortisseur 10 est formée en deux pièces inférieure et supérieure distinctes, respectivement 101 et 102, chacune formée dans un matériau composite. La plaque d'appui 11 vient en appui contre la pièce inférieure 101, la direction et le sens de l'appui de la plaque 11 contre la pièce 101 correspondant globalement à la direction et au sens des efforts repris par la plaque d'appui 11 en provenance de l'amortisseur.

La pièce inférieure 101 et la pièce supérieure 102 sont conformées et assemblées entre elles de sorte à délimiter intérieurement un corps creux 13, c'est-à-dire délimitant un volume interne. Les éléments de fixation de la plaque d'appui 11 sur la coupelle d'amortisseur 10 comprennent des éléments d'entretoisement entre les pièces inférieure et supérieure 101, 102 à l'intérieur de ce corps creux, selon la direction d'orientation de l'appui de la plaque d'appui 11 contre la coupelle d'amortisseur 10.

La nature et la constitution de tels éléments d'entretoisement peuvent être quelconques. Dans la variante illustrée donnant une totale satisfaction dans le but recherché, les éléments d'entretoisement comprennent au moins un écrou soudé 14 à la plaque d'appui 11, notamment une pluralité de tels écrous soudés 14 répartis sur l'interface de contact entre la plaque d'appui 11 et la coupelle d'amortisseur 10. Chaque écrou soudé 14 est orienté de manière à s'étendre en saillie de la plaque d'appui 11 et à traverser l'épaisseur de la coupelle d'amortisseur 10, notamment la totalité de l'épaisseur du corps creux 13. Le cordon de soudure fixant l'écrou 14 à la plaque d'appui est repéré 20, maintenant l'écrou soudé 14 dans une position telle que l'écrou soudé traverse l'épaisseur de la plaque d'appui 11 et que son axe de vissage est localement perpendiculaire à la plaque d'appui 11.

Les éléments d'entretoisement peuvent aussi comprendre une vis 15 associée à chaque écrou soudé 14 et coopérant par vissage avec l'écrou soudé 14 associé. Chaque vis 15 comporte une tête 16 assurant une retenue axiale de la pièce supérieure 102 de sorte que la tête 16 de la vis 15 et la plaque d'appui 11 constituent des butées de retenue orientées dans des sens opposés respectivement pour la pièce supérieure 102 et pour la pièce inférieure 101.

Préférentiellement, la vis 15 et l'écrou soudé 14 associé sont configurés de sorte que lorsque la vis 15 est en butée de vissage dans l'écrou soudé 14 qui lui associé, la tête 16 ménage un premier entrefer E1 par rapport à la pièce supérieure 101. Les éléments de fixation de la plaque d'appui 11 sur la coupelle d'amortisseur 10 comprend une première quantité de colle 17 disposée entre la tête 16 de la vis 15 et la pièce supérieure 102 dans ce premier entrefer E1.

Les éléments de fixation de la plaque d'appui 11 sur la coupelle d'amortisseur 10 peuvent comprendre une deuxième quantité de colle 18 disposée entre la plaque d'appui 11 et la coupelle d'amortisseur 10, notamment au niveau de la pièce inférieure 101. A cet effet, il pourra être avantageux de faire en sorte que la pièce d'appui 11 délimite un épaulement 19 pour délimiter un deuxième entrefer E2 interposé entre la plaque d'appui 11 et la coupelle d'amortisseur 10, notamment au niveau de la pièce inférieure 101, et permettant l'application de la deuxième quantité de colle 18.

La plaque d'appui 11 munie des écrous soudés 14 est plaquée contre la pièce inférieure 101 de la coupelle d'amortisseur 10 et est maintenue en position par l'effet combiné de la colle 17, 18 et de la vis 15 mise en place par le haut de la coupelle d'amortisseur 10 et vissée en butée dans l'écrou soudé 14 associé.

Cette solution permet de ne pas mettre sous contrainte permanente le matériau composite dans lequel la coupelle d'amortisseur 10 est constituée. Via les éléments d'entretoisement constitués, l'amortisseur peut être mis en place puis le couple de serrage nécessaire à son maintien sur la coupelle 10 peut être appliqué en toute quiétude. Ils créent une cote entretoisant le matériau composite de la coupelle 10. Ainsi, les efforts de serrage ou de fonctionnement en cours de roulage ne transitent jamais par le matériau composite de la coupelle 10. L'ensemble étant monté collé, toutes les dispersions géométriques sont donc comblées par la colle et l'ensemble se retrouve donc solidaire. Il n'y a donc pas de risque de détériorer le matériau au moment de fixer l'amortisseur sur la coupelle 10. Par ailleurs, le matériau n'étant pas précontraint, il n'y aura pas d'effet de fluage dans le temps. Il en résulte une absence de risque de perte inopinée et indésirable de tension dans le couple de serrage de l'amortisseur sur la coupelle 10.

## Revendications

1. Dispositif pour monter un amortisseur sur une caisse d'un véhicule automobile, comprenant une coupelle d'amortisseur (10) en matériau composite intégrée à la caisse, le dispositif comprenant une plaque d'appui (11) destinée à être interposée entre l'amortisseur et la coupelle d'amortisseur (10), ayant des éléments de fixation (12) permettant la fixation d'une extrémité de l'amortisseur sur la plaque d'appui (11), et configurée de sorte à reprendre les efforts de compression de l'amortisseur et à être en appui contre la coupelle d'amortisseur (10) d'une manière répartissant ces efforts sur toute l'interface de contact entre la plaque d'appui (11) et la coupelle d'amortisseur (10), le dispositif comprenant également des éléments de fixation (14, 15, 16, 17, 18, 19) de la plaque d'appui (11) sur la coupelle d'amortisseur (10), **caractérisé en ce que** la coupelle d'amortisseur (10) est formée en deux pièces inférieure et supérieure (101, 102) distinctes, chacune formée dans un matériau composite, et **en ce que** la plaque d'appui (11) vient en appui contre la pièce inférieure (101), les pièces inférieure et supérieure (101, 102) étant conformées et assemblées entre elles de sorte à délimiter intérieurement un corps creux (13) et **en ce que** les éléments de fixation (14, 15, 16, 17, 18, 19) de la plaque d'appui (11) sur la coupelle d'amortisseur (10) comprennent des éléments d'entretoisement entre les pièces inférieure et supérieure (101, 102) à l'intérieur du corps creux (13), selon la direction d'orientation de l'appui de la plaque d'appui (11) contre la coupelle d'amortisseur (10).

2. Dispositif selon la revendication 1, **caractérisé en ce que** les éléments d'entretoisement comprennent au moins un écrou soudé (14) à la plaque d'appui (11), notamment une pluralité de tels écrous soudés (14) répartis sur ladite interface, chaque écrou soudé (14) étant orienté de manière à s'étendre en saillie de la plaque d'appui (11) et à traverser l'épaisseur de la coupelle d'amortisseur (10), notamment la totalité de l'épaisseur du corps creux (13).

3. Dispositif selon la revendication 2, **caractérisé en ce que** les éléments d'entretoisement comprennent une vis (15) associée à chaque écrou soudé (14) et coopérant par vissage avec l'écrou soudé (14) associé, la vis (15) ayant une tête (16) assurant une retenue axiale de la pièce supérieure (102) de sorte que la tête (16) de la vis (15) et la plaque d'appui (11) constituent des butées de retenue orientées dans des sens opposés respectivement pour les pièces supérieure et inférieure (101, 102).

4. Dispositif selon la revendication 3, **caractérisé en ce que** la vis (15) et l'écrou soudé (14) associé sont configurés de sorte que la vis (15) étant en butée de vissage dans l'écrou soudé (14), la tête (16) ménage un premier entrefer (E1) par rapport à la pièce supérieure (102) et **en ce que** les éléments de fixation (14, 15, 16, 17, 18, 19) de la plaque d'appui (11) sur la coupelle d'amortisseur (10) comprend une première quantité de colle (17) disposée entre la tête (16) de la vis (15) et la pièce supérieure (102) dans le premier entrefer (E1).

5. Dispositif selon l'une des revendications 1 à 4, **caractérisé en ce que** les éléments de fixation (14, 15, 16, 17, 18, 19) de la plaque d'appui (11) sur la coupelle d'amortisseur (10) comprennent une deuxième quantité de colle (18) disposée entre la plaque d'appui (11) et la coupelle d'amortisseur (10), notamment au niveau de la pièce inférieure (101).

6. Dispositif selon la revendication 5, **caractérisé en ce que** la pièce d'appui (11) délimite un épaulement (19) pour délimiter un deuxième entrefer (E2) interposé entre la plaque d'appui (11) et la coupelle d'amortisseur (10) et permettant l'application de la deuxième quantité de colle (18).

7. Dispositif selon l'une des revendications 1 à 6, **caractérisé en ce que** les éléments de fixation (12) permettant la fixation d'une extrémité de l'amortisseur sur la plaque d'appui (11) comprennent un mécanisme permettant l'application d'un couple de serrage sur l'amortisseur assurant la fixation de l'extrémité de l'amortisseur sur la plaque d'appui (11), la plaque d'appui (11) étant enserrée entre ledit mécanisme et ladite extrémité d'amortisseur.

8. Véhicule automobile comprenant une caisse, au moins un amortisseur et un dispositif selon l'une quelconque des revendications précédentes assurant le montage de l'amortisseur sur la caisse.

## Patentansprüche

1. Vorrichtung zur Montage eines Dämpfers an einem Fahrzeugaufbau eines Kraftfahrzeugs, umfassend einen in den Fahrzeugaufbau integrierten Dämpferteller (10) aus Verbundmaterial, wobei die Vorrichtung eine Stützplatte (11) umfasst, die dazu bestimmt ist, zwischen den Dämpfer und den Dämpferteller (10) gesetzt zu werden, Befestigungselemente (12) hat, die das Befestigen eines Endes des Dämpfers an der Stützplatte (11) ermöglichen, und so ausgebildet ist, dass sie die Druckbeanspruchungen des Dämpfers aufnimmt, und an dem Dämpferteller (10) derart abgestützt ist, dass diese Beanspruchungen über die gesamte Kontaktgrenzfläche zwischen der Stützplatte (11) und dem Dämpferteller (10) verteilt werden, wobei die Vorrichtung auch Befestigungselemente (14, 15, 16, 17, 18, 19) zum Befestigen der Stützplatte (11) am Dämpferteller (10) umfasst, **dadurch gekennzeichnet, dass** der Dämpferteller (10) aus zwei separaten Unter- und Oberteilen (101, 102) gebildet wird, die jeweils aus einem Verbundmaterial gebildet sind, dass sich die Stützplatte (11) an dem Unterteil (101) abstützt, wobei die Unter- und Oberteile (101, 102) so ausgebildet und zusammengebaut sind, dass sie innen einen Hohlkörper (13) begrenzen, und dass die Befestigungselemente (14, 15, 16, 17, 18, 19) zum Befestigen der Stützplatte (11) am Dämpferteller (10) Aussteifungselemente zwischen den Unter- und Oberteilen (101, 102) im Innern des Hohlkörpers (13) entlang der Richtung der Abstützung der Stützplatte (11) am Dämpferteller (10) umfassen.

2. Vorrichtung nach Anspruch 1, **dadurch gekennzeichnet, dass** die Aussteifungselemente mindestens eine an die Stützplatte (11) geschweißte Mutter (14) umfassen, insbesondere eine Mehrzahl derartiger geschweißter Muttern (14), die auf der Grenzfläche verteilt sind, wobei jede geschweißte Mutter (14) so ausgerichtet ist, dass sie sich aus der Stützplatte (11) herausragend erstreckt und die Dicke des Dämpfertellers (10), insbesondere die gesamte Dicke des Hohlkörpers (13), durchquert.

3. Vorrichtung nach Anspruch 2, **dadurch gekennzeichnet, dass** die Aussteifungselemente für jede geschweißte Mutter (14) eine zugehörige Schraube (15) umfassen, die durch Verschrauben mit der zugehörigen geschweißten Mutter (14) zusammenwirkt, wobei die Schraube (15) einen Kopf (16) hat, der ein axiales Halten des Oberteils (102) derart gewährleistet, dass der Kopf (16) der Schraube (15) und die Stützplatte (11) entgegengesetzt gerichtete Halteanschläge für die Unter- und Oberteile (101, 102) bilden.

4. Vorrichtung nach Anspruch 3, **dadurch gekennzeichnet, dass** die Schraube (15) und die zugehörige geschweißte Mutter (14) so ausgebildet sind, dass, wenn die Schraube (15) bis zum Anschlag in die geschweißte Mutter (14) geschraubt ist, der Kopf (16) einen ersten Spalt (E1) in Bezug auf das Oberteil (102) bildet, und dass die Befestigungselemente (14, 15, 16, 17, 18, 19) zum Befestigen der Stützplatte (11) am Dämpferteller (10) eine erste Klebstoffmenge (17) umfassen, die zwischen dem Kopf (16) der Schraube (15) und dem Oberteil (102) in dem ersten Spalt (E1) angeordnet ist.

5. Vorrichtung nach einem der Ansprüche 1 bis 4, **dadurch gekennzeichnet, dass** die Befestigungselemente (14, 15, 16, 17, 18, 19) zum Befestigen der Stützplatte (11) am Dämpferteller (10) eine zweite Klebstoffmenge (18) umfassen, die zwischen der Stützplatte (11) und dem Dämpferteller (10), insbesondere auf Höhe des Unterteils (101), angeordnet ist.

6. Vorrichtung nach Anspruch 5, **dadurch gekennzeichnet, dass** das Stützteil (11) eine Schulter (19) begrenzt, um einen zweiten Spalt (E2) zu begrenzen, der zwischen der Stützplatte (11) und dem Dämpferteller (10) gelegen ist und das Aufbringen der zweiten Klebstoffmenge (18) ermöglicht.

7. Vorrichtung nach einem der Ansprüche 1 bis 6, **dadurch gekennzeichnet, dass** die Befestigungselemente (12), die das Befestigen eines Endes des Dämpfers an der Stützplatte (11) ermöglichen, einen Mechanismus umfassen, der das Aufbringen eines Anziehdrehmoments am Dämpfer ermöglicht, das die Befestigung des Endes des Dämpfers an der Stützplatte (11) gewährleistet, wobei die Stützplatte (11) zwischen dem Mechanismus und dem Dämpferende eingespannt ist.

8. Kraftfahrzeug, umfassend einen Fahrzeugaufbau, mindestens einen Dämpfer und eine Vorrichtung nach einem der vorhergehenden Ansprüche, die die Montage des Dämpfers am Fahrzeugaufbau gewährleistet.

## Claims

1. Device for mounting a damper on a body of a motor vehicle, comprising a damper cup (10) of composite material integrated in the body, the device comprising a support plate (11) intended to be interposed between the damper and the damper cup (10) and having fixing elements (12) allowing the fixing of one end of the damper to the support plate (11), and configured so as to absorb the compression forces of the damper and rest against the damper cup (10) in a manner distributing these forces over the entire contact interface between the support plate (11) and the damper cup (10), the device also comprising elements (14, 15, 16, 17, 18, 19) for fixing the support plate (11) to the damper cup (10), **characterized in that** the damper cup (10) is formed from two separate lower and upper parts (101, 102), each formed from composite material, and **in that** the support plate (11) comes to rest against the lower part (101), being the lower and upper parts (101, 102) shaped and joined together so as to delimit on the inside a hollow body (13), and **in that** the elements (14, 15, 16, 17, 18, 19) for fixing the support plate (11) to the damper cup (10) comprise bracing elements between the lower and upper parts (101, 102) inside the hollow body (13) in the direction of orientation of the support of the support plate (11) against the damper cup (10).

2. Device according to Claim 1, **characterized in that** the bracing elements comprise at least one nut (14) welded to the support plate (11), in particular a plurality of such welded nuts (14) distributed over said interface, each welded nut (14) being oriented so as to protrude from the support plate (11) and pass through the thickness of the damper cup (10), in particular the entire thickness of the hollow body (13).

3. Device according to Claim 2, **characterized in that** the bracing elements comprise a bolt (15) associated with each welded nut (14) and cooperating by screwing with the associated welded nut (14), the bolt (15) having a head (16) ensuring axial retention of the upper part (102) such that the head (16) of the bolt (15) and the support plate (11) constitute retention stops oriented in opposite directions for the upper and lower parts (101, 102) respectively.

4. Device according to Claim 3, **characterized in that** the bolt (15) and the associated welded nut (14) are configured such that when the bolt (15) reaches the end of its screwing into the welded nut (14), the head (16) provides a first gap (E1) relative to the upper part (102), and that the elements (14, 15, 16, 17, 18, 19) for fixing the support plate (11) to the damper cup (10) comprise a first quantity of adhesive (17) arranged between the head (16) of the bolt (15) and the upper part (102) in the first gap (E1).

5. Device according to any of Claims 1 to 4, **characterized in that** the elements (14, 15, 16, 17, 18, 19) for fixing the support plate (11) to the damper cup (10) comprise a second quantity of adhesive (18) arranged between the support plate (11) and the damper cup (10), in particular at the level of the lower part (101).

6. Device according to Claim 5, **characterized in that** the support piece (11) delimits a shoulder (19) in order to delimit a second gap (E2) interposed between the support plate (11) and the damper cup (10) which allows the application of the second quantity of adhesive (18).

7. Device according to any of Claims 1 to 6, **characterized in that** the fixing elements (12) allowing the fixing of one end of the damper to the support plate (11) comprise a mechanism allowing the application of a tightening torque on the damper, ensuring the fixing of the end of the damper onto the support plate (11), the support plate (11) being clamped between said mechanism and said end of the damper.

8. Motor vehicle comprising a body, at least one damper and a device according to any of the preceding claims ensuring mounting of the damper on the body.
